# EUROPEAN PATENT SPECIFICATION

(11) **EP 1 226 342 B1**
(45) Date of publication and mention of the grant of the patent: **29.12.2004**
(21) Application number: 00973069.8
(22) Date of filing: 06.11.2000
(51) Int. Cl.: F02B 17/00, F02B 47/08

(54) **STRATIFIED EXHAUST GAS RECIRCULATION ENGINE**
MOTOR MIT GESCHICHTETER ABGASRÜCKFÜHRUNG
MOTEUR A RECIRCULATION DES GAZ D'ECHAPPEMENT STRATIFIES

(30) Priority: 04.11.1999 GB 9926053
(43) Date of publication of application: 31.07.2002
(73) Proprietor: Ford Global Technologies, Inc., Dearborn, Michigan 48136 (US)
(72) Inventor: MA, Thomas, Tsoi-Hei, South Woodham Ferrers Essex CM3 5YL (GB)
(74) Representative: Messulam, Alec Moses
(86) International application number: PCT/GB2000/004257
(87) International publication number: WO 2001/033055

(56) References cited:
- EP-A- 0 863 301
- FR-A- 2 703 107
- US-A- 4 779 594
- US-A- 5 918 577
- US-A- 5 957 096

## Description

### Field of the Invention

The present invention relates to a four-stroke reciprocating internal combustion engine which runs during part-load operation with stratified charge and a high proportion of internal exhaust gas recirculation (EGR).

### Background of the invention

It is known that two-stroke engines can run smoothly during part load conditions with a large stratified volume of exhaust gases in the cylinder and can also operate in a homogeneous charge compression ignition (HCCI) or controlled autoignition combustion mode without relying on a spark for ignition. A large stratified volume of exhaust gases is possible because of the inherent ability in the two-stroke engine to vary the scavenging efficiency over a wide range by delaying the start of the exhaust phase to a later part of the engine stroke and shortening the exhaust phase within the stroke. It is however difficult to achieve a similar condition in a four-stroke engine because the scavenging process in this case takes place throughout the entire stroke of the engine.

EP-A-0 863 301, describes a method of controlling auto-ignition in a four stroke engine that relies on variable intake and exhaust valve timing. During part load, the time that burnt gases remain in the combustion chamber is increased and this is followed by a fresh intake period to achieve a stratified charge with a high percentage of EGR. In one embodiment of the described embodiments of the invention, the exhaust event is prolonged to terminate during the intake stroke and the intake event commences just after the termination of the exhaust event and terminates during the compression stroke. To avoid back-flow into the intake manifold during the compression stroke, a non-return valve is provided in the intake port but this can be dispensed with,if one can arrange for the intake valve itself to close at the end of the induction stroke.

US-A-5957096 discloses an engine operating with modified valve timing (retarded inlet and exhaust events) during part load operation and having a 90° cut out in a flow diverter butterfly valve arranged in the intake port to promote swirl.

The present invention aims to achieve a large stratified volume of exhaust gases in the cylinder of a four-stroke reciprocating internal combustion engine similar to that found in a two-stroke engine. Such an engine can be expected to yield low fuel consumption during part load operation because of reduced pumping work, and to be capable of operating in the HCCI combustion mode producing ultra low NOx emissions.

According to a first aspect of the invention, there is provided a method of operating a four-stroke reciprocating internal combustion engine, the method comprising the steps of drawing only exhaust gases from an engine exhaust port into the engine cylinder during at least the first 30° period of the intake stroke, drawing intake air from an engine intake port into the engine cylinder during the remaining period of the intake stroke, expelling a substantial proportion of the intake air back into the intake port during at least the first 70° period of the compression stroke, and trapping and compressing the remaining cylinder charge during the remaining period of the compression stroke, and further comprising the step of mounting a bi-directional flow obstruction in the intake port to segregate a predetermined volume of the intake port from the remainder of the intake manifold such that, when the intake valve opens, the air pressure in the segregated volume is substantially equal to the gas pressure in the cylinder and such that, during the remaining intake stroke, air enters the cylinder predominantly by bulk expansion of the air in the segregated volume from an initial pressure when the intake valve opens to a lower pressure at the end of the intake stroke.

In EP-A-0 863 301, the provision of the non-return valve in the intake port does not achieve the purpose of the bi-directional obstruction of the present invention, which is to regulate the flow so as minimise the mixing between the intake charge and the exhaust gases already present in the combustion chamber. The action of a non-return valve is to compress the gas in the intake port between the non-return valve and intake valve and when the intake valve is next open there will be a surge flow to disturb the , stratification within the combustion chamber. By contrast, in the present invention, equalisation in the intake manifold takes place while the intake valve is closed thereby eliminating the initial surge of air into the combustion chamber and regulating subsequent intake flow to reduce mixing in the combustion chamber and thereby preserve charge stratification.

The terms "intake", "compression", "expansion" and "exhaust" strokes are used herein in their normal sense to refer to the four movements of the piston between its top (tdc) and bottom (bdc) dead centre positions during one complete engine cycle corresponding to 720° of crankshaft rotation. All measurements of angle used herein refer to angles of rotation of the crankshaft (as opposed to angles of rotation of the camshaft which rotates at half the speed).

According to a second aspect of the present invention, there is provided a four stroke reciprocating internal combustion engine, wherein the exhaust and intake valve timings are set such that the exhaust valve is closed at or after 30° after tdc, and the intake valve is opened at or after 30° after tdc and closed at or after 70° after bdc, and wherein a two-position butterfly throttle having a perforated plate movable between a closed position in which it lies across the intake port and an open position in which it lies parallel to the direction of air flow through the intake port for segregating a predetermined volume of air in the intake port immediately upstream of the intake valve and wherein the perforated plate has a perforation ratio of less than 5%.

Preferably, the segregated volume is less than one half of the swept volume of the engine cylinder.

Conveniently, the intake port obstruction is a two-position perforated butterfly throttle plate having a perforation ratio of less than 5% and movable between a closed position in which it lies across the intake port and an open position in which it lies parallel to the direction of air flow through the intake port.

By following through the gas exchange process according to the said valve timings, it will be clear that the invention can enable a large volume of exhaust gases to be trapped in the cylinder. This volume may constitute between 30% and 50% of the overall volume of the trapped charge.

Preferably, a variable valve timing system is provided to set the said valve timings when desired. Conveniently, the variable valve timing system is a variable camshaft phasing system for varying the phase of a single camshaft operating both the exhaust and intake valves.

Alternatively, the variable valve timing system is a variable camshaft phasing system for varying separately the phases of separate camshafts operating separately the exhaust and intake valves respectively. In this case, the variable camshaft phasing system may be a dual-equal phasing system in which the phases of the exhaust and intake camshafts are varied by the same amount and in the same direction.

In embodiments of the invention, fuel may be introduced into the intake air to form a homogeneous charge upstream of the intake port, within the intake port or directly into the cylinder. Because the stratified exhaust gases in the cylinder is significantly hotter than the combustible charge, the latter may be ignited by compression ignition at the stratification interface without relying on a spark, thus achieving HCCI or controlled autoignition. Where a spark is used to ignite the charge, the flame propagation time will also be short because of the compactness of the charge bounded by the stratified exhaust gases. Thus ultra low NOx emissions and low fuel consumption are achieved.

### Brief description of the drawings

The invention will now be described further, by way of example, with reference to the accompanying drawings, in which:
Figure 1 is a schematic section through a combustion chamber of an internal combustion engine embodying the invention,
Figure 2 is a valve timing diagram, and
Figures 3 and 4 are sections similar to the section of Figure 1 at different times in the operating cycle showing the distribution of EGR gases and intake air within the combustion chamber.

### Detailed description of the preferred embodiments

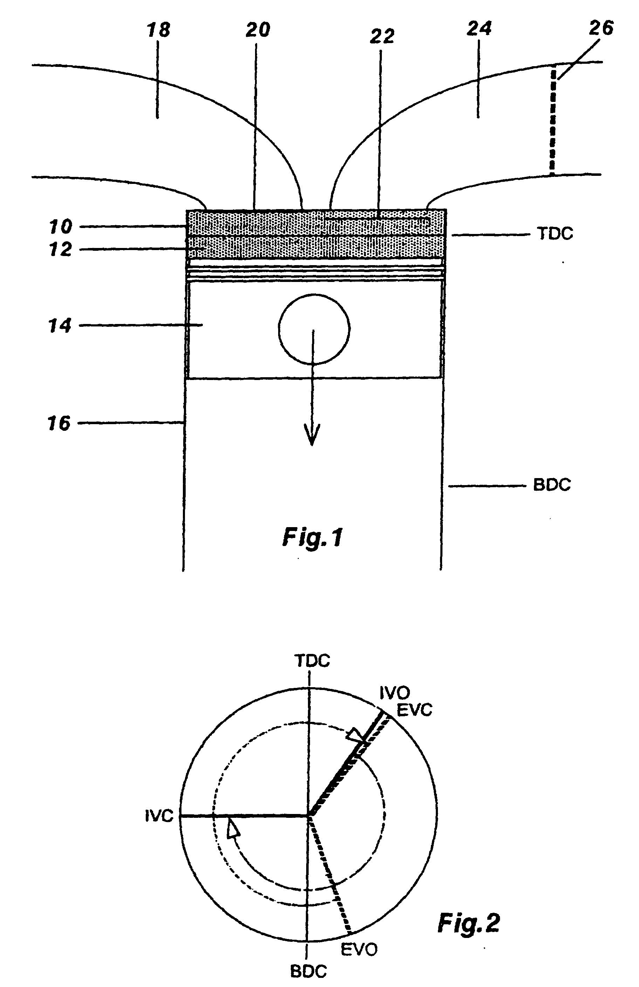

Figure 1 shows a variable volume combustion chamber defined between a cylinder 16 and a piston 14. The piston reciprocates between a top dead centre position (tdc) and a bottom dead centre position (bdc) as illustrated in Figure 1. The combustion chamber has a clearance volume 10, this being the minimum volume of the combustion chamber when the piston is at tdc. An intake port 24 controlled by an intake valve 22 supplies a fuel and air mixture to the combustion chamber while an exhaust port 18 controlled by an exhaust valve 20 allows burnt gases to be discharged to atmosphere at the end of the combustion cycle. The intake port 24 is obstructed by an butterfly throttle 26 the plate of which is perforated to allow some air through even when the butterfly plate is fully closed. The volume of air trapped between the plate 26 and the closed intake valve 22 is herein referred as the segregated volume.

When operating under high load conditions, the butterfly plate 26 is moved to a position at right angles to the position illustrated in Figure 1 and presents no obstruction to the air intake. Also during high load conditions, the engine is operated with conventional valve timing.

When operating under part load conditions, on the other hand, the butterfly plate 26 is moved to the closed position shown in Figure 1 and the valve timing of the intake and exhaust valves is as shown in Figure 2. In this Figure, the intake valve opening IVO occurs 30° after tdc during the intake stroke and the intake valve closing IVC occurs 90° after bdc in the compression stroke. Of course compression cannot take place while the intake valve is still open and the term compression stroke is being used in its normal sense, as previously mentioned, to indicate the movement of the piston from bdc to tdc. The exhaust valve opening EVO, on the other hand, occurs at about 20° before bdc at the end of the expansion stroke and the exhaust valve closing EVC occurs shortly after IVO.

The combined effect of the valve timing shown in Figure 2 and the presence of the butterfly plate 26 in the intake port is to enable a stratified charge with a high proportion of exhaust gases to be achieved.

Starting with the piston at tdc at the commencement of the intake stroke, the exhaust valve 20 at this time is open but the intake valve 22 is closed. Therefore as the piston moves down the cylinder, the expansion of the combustion chamber will draw into it exhaust gases from the exhaust port 18. At about 30° after tdc, the intake valve 22 opens and the exhaust valve 20 closes. At the instant of opening of the intake valve 22, both the pressure in the combustion chamber and the pressure in the segregated volume of the intake port 24 will be a little below atmospheric pressure. In view of this pressure balance, no sudden surge of intake air into the combustion chamber nor exhaust gases out of the combustion chamber occurs when the intake valve 22 opens. This is the piston position shown in Figure 1 where the combustion chamber is totally filled with exhaust gases shown by the shading 12 while the fresh intake air remains in the intake port.

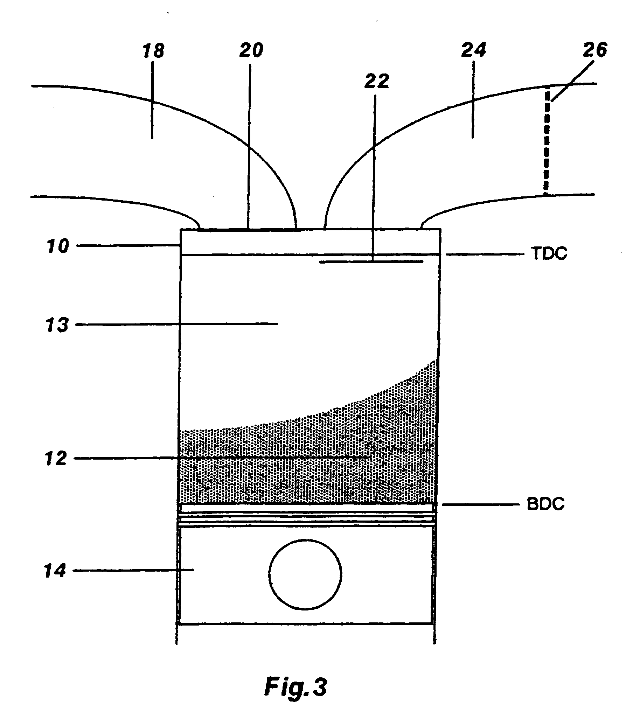

As the piston 14 continues to move towards bdc in the intake stroke, the butterfly plate 26 allows only a trickle of air to enter the segregated volume of the intake port 24. Nevertheless as the pressure is reduced in the combustion chamber by the downward movement of the piston 14, the gases in the combustion chamber and the segregated volume of the intake port will stretch or expand without major gas movement to occupy the increased space. This will result in some air entering the cylinder to produce the stratified distribution at bdc shown in Figure 3.

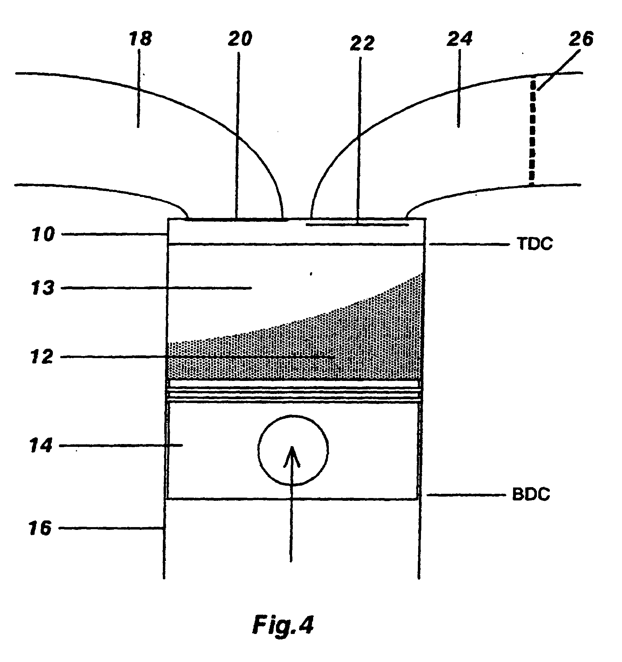

During the first part of the ensuing compression stroke, the intake valve 22 is still open and the pressure in the cylinder is below atmospheric. Consequently, a net force acts on the piston 14 to pull it upwards into the combustion chamber while the gases contract. During this contraction, some of the air in the cylinder will be retracted into the segregated volume of the intake port 24. When the intake valve 22 is finally about to close, the distribution of gases will be as illustrated in Figure 4, that is to say, there will be two layers, one formed predominantly of exhaust gases and the other of intake air, and a high proportion of the trapped charge will comprise exhaust gases. This distribution of stratification is maintained during the next part of the compression stroke because there is no net gas movement tending to promote mixing, be it swirl or tumble.

The large area interface between the layers of the stratified charge allows the intake gases to be heated by the exhaust gases creating the ideal conditions for autoignition.

The function of the intake port throttle in the described preferred embodiment is two-fold. First, during the period between intake strokes of successive engine cycles, the segregated volume downstream of the port throttle will be refilled with ambient air flowing past the throttle so that the air pressure in the volume will have reached substantially ambient pressure before the intake valve next opens. Thus when the intake valve opens in the next cycle, the air pressure in the intake port will be substantially equal to the gas pressure in the cylinder and the exhaust gases already in the cylinder will remain in the cylinder.

Second, as the piston moves progressively away from tdc towards bdc, the air in the segregated volume will enter the cylinder substantially by bulk expansion as the whole charge in the connected volume of the cylinder and the segregated intake port, being almost completely blocked at one end, is stretched uniformly to a decreasing pressure and reaches the lowest density at bdc. In this case, the air velocity entering the cylinder will be relatively low and will not significantly disturb the correspondingly stretched volume of exhaust gases already in the cylinder thus preserving the EGR stratification in the cylinder. Furthermore, by designing the throttle as a perforated plate, the air drawn past the plate will be broken up into micro-jets, dissipating rapidly to a uniform low velocity with little turbulence, thus further reducing the penetration and mixing effect of the intake air entering the cylinder.

During the first part of the compression stroke when the intake valve is still open, the initial low pressure in the cylinder will cause the piston to move away from bdc towards tdc, and some air will contract into the intake port as the whole charge in the connected volume of the cylinder and the segregated intake port shrinks uniformly to a higher sub-ambient pressure until the intake valve closes and compression begins. Because the exhaust gases are stratified, the content of the charge contracted into the intake port will be mainly intake air with most of the exhaust gases still retained in the cylinder, thus increasing the relative exhaust gas proportion in the cylinder. On the other hand, if mixing occurs to some degree, a quantity of exhaust gases will be carried with the contracted air and stored in the segregated volume. This quantity will be drawn back into the cylinder in the next engine cycle, adding to the exhaust gases already in the cylinder so that the absolute exhaust gas proportion in the cylinder will also increase from cycle to cycle, until it reaches a stable value after many cycles.

To enable the valve timing to be varied in dependence upon whether the engine is operating under part load or high load, a variable valve timing system is used to set the valve timings as desired. It should be noticed that the relative timing and the valve event durations used during part load operation can be the same as those used under high load and it is only necessary to phase shift both the intake valve and exhaust valve events by equal amounts relative to the engine crankshaft. Hence the variable valve timing system may in the simplest case comprise a single phase shifter acting on a single camshaft acting on both the intake and exhaust valves.

Alternatively, the variable valve timing system may be a variable camshaft phasing system for varying separately the phases of separate camshafts operating on the exhaust and intake valves respectively. In this case, the variable camshaft phasing system may be a dual-equal phasing system in which the phases of the exhaust and intake camshafts are varied by the same amount and in the same direction.

Fuel may be introduced into the intake air to form a homogeneous charge upstream of the intake port, within the intake port or directly into the cylinder. Because the stratified exhaust gases in the cylinder is significantly hotter than the combustible charge, the latter may be ignited by compression ignition at the stratification interface without relying on a spark, thus achieving HCCI or controlled autoignition. Where a spark is used to ignite the charge, the flame propagation time will also be short because of the compactness of the charge bounded by the stratified exhaust gases. Thus ultra low NOx emissions and low fuel consumption are achieved.

It should be mentioned that while intended primarily for a naturally-aspirated engine, turbo-charging and supercharging would not interfere with the charge stratification, it being only necessary to ensure that the pressures on both sides of the intake valve are balanced at the time that the intake valve opens.

## Claims

1. A method of operating a four-stroke reciprocating internal combustion engine, the method comprising the steps of drawing only exhaust gases from an engine exhaust port into the engine cylinder during at least the first 30° period of the intake stroke, drawing intake air from an engine intake port into the engine cylinder during the remaining period of the intake stroke, expelling a substantial proportion of the intake air back into the intake port during at least the first 70° period of the compression stroke, and trapping and compressing the remaining cylinder charge during the remaining period of the compression stroke, and further comprising the step of mounting a bi-directional flow obstruction in the intake port to segregate a predetermined volume of the intake port from the remainder of the intake manifold such that, when the intake valve opens, the air pressure in the segregated volume is substantially equal to the gas pressure in the cylinder and such that, during the remaining intake stroke, air enters the cylinder predominantly by bulk expansion of the air in the segregated volume from an initial pressure when the intake valve opens to a lower pressure at the end of the intake stroke.

2. A four stroke reciprocating internal combustion engine, wherein the exhaust and intake valve timings are set such that the exhaust valve (20) is closed at or after 30° after tdc, and the intake valve (22) is opened at or after 30° after tdc and closed at or after 70° after bdc, and wherein a two-position butterfly throttle (26) having a perforated plate movable between a closed position in which it lies across the intake port and an open position in which it lies parallel to the direction of air flow through the intake port for segregating a predetermined volume of air in the intake port (24) immediately upstream of the intake valve (22) and wherein the perforated plate has a perforation ratio of less than 5%.

3. An engine as claimed in any of claim 2, wherein the segregated volume is less than one half of the swept volume of the engine cylinder.

4. An engine as claimed in any of claims 2 or 3, wherein a variable valve timing system is provide to set the said valve timings when desired.

5. An engine as claimed in claim 4, wherein the variable valve timing system is a variable camshaft phasing system for varying the phase of a single camshaft operating both the exhaust and intake valves.

6. An engine as claimed in claim 4, wherein the variable valve timing system is a variable camshaft phasing system for varying separately the phases of separate camshafts operating separately the exhaust and intake valves respectively.

7. An engine as claimed in claim 6, wherein the variable camshaft phasing system is a dual-equal phasing system in which the phases of the exhaust and intake camshafts are varied by the same amount and in the same direction.

## Patentansprüche

1. Verfahren zum Betreiben einer Viertakt-Hubkolben-Brennkraftmaschine, welches Verfahren die folgenden Schritte beinhaltet: Ansaugen nur von Abgasen von einer Motorauslaßöffnung in den Motorzylinder über eine Periode von wenigstens 30° des Ansaugtaktes, Ansaugen von Luft von einer Motoreinlaßöffnung in den Motorzylinder über die restliche Periode des Ansaugtaktes, Ausstoßen eines wesentlichen Anteils der Ansaugluft zurück in den Ansaugkanal über eine Periode von wenigstens 70° des Verdichtungstaktes, und Einschließen und Verdichten der restlichen Zylindercharge während der restlichen Periode des Verdichtungstaktes, und außerdem den Schritt des Einbaus einer bidirektionalen Strömungsdrossel in der Ansaugöffnung beinhaltend, so daß ein vorgegebenes Volumen der Ansaugöffnung vom Rest des Ansaugkanals derart abgeteilt wird, daß, wenn sich das Einlaßventil öffnet, der Luftdruck im abgeteilten Volumen im wesentlichen gleich dem Gasdruck im Zylinder ist, und so daß der Eintritt der Luft in den Zylinder während des besagten restlichen Ansaughubes vorwiegend durch die Ausdehnung der Luftmasse im abgeteilten Volumen erfolgt, die sich von einem Ausgangsdruck aus, wenn sich das Einlaßventil öffnet, bis auf einen niedrigeren Druck am Ende des Ansaughubes dehnt.

2. Viertakt-Hubkolben-Brennkraftmaschine, worin die Steuerzeiten der Auslaß- und der Einlaßventile so eingestellt sind, daß das Auslaßventil (20) bei oder nach 30° nach OT geschlossen ist, und daß das Einlaßventil (22) bei oder nach 30° nach OT geöffnet ist und bei oder nach 70° nach UT geschlossen ist, und worin eine Drosselklappe (26) mit zwei Stellungen mit einer gelochten Drosselklappenplatte versehen ist, die zwischen einer geschlossenen Stellung, in der sie quer in der Einlaßöffnung liegt, und einer offenen Stellung, in der sie parallel zur Luftströmungsrichtung durch die Einlaßöffnung liegt, verstellbar ist, so daß ein vorgegebenes Luftvolumen in der Einlaßöffnung (24) unmittelbar stromoberhalb des Einlaßventils (22) abgeteilt werden kann, und worin die gelochte Drosselklappenplatte einen Lochanteil von weniger als 5% hat.

3. Motor nach Anspruch 2, worin das abgeteilte Volumen weniger als die Hälfte des Hubvolumens des Motorzylinders beträgt.

4. Motor nach einem beliebigen der Ansprüche 2 oder 3, worin ein verstellbares Ventilsteuersystem vorgesehen ist, um die besagten Ventilsteuerzeiten einstellen zu können, wenn es gewünscht wird.

5. Motor nach Anspruch 4, worin das verstellbare Ventilsteuersystem ein phasenverstellbares Nockenwellensystem ist, mit dem die Phase einer einzelnen Nockenwelle verstellt werden kann, die sowohl die Auslaß- als auch die Einlaßventile betätigt.

6. Motor nach Anspruch 4, worin das verstellbare Ventilsteuersystem ein phasenverstellbares Nockenwellensystem ist, mit dem die Phasen von getrennten Nockenwellen, welche jeweils getrennt die Auslaß- und die Einlaßventile betätigen, jeweils getrennt verstellt werden können.

7. Motor nach Anspruch 6, worin das phasenverstellbare Nockenwellensystem ein doppeltes Phasenverstellsystem mit jeweils gleicher Phasenverstellung ist, bei dem die Phasen der Auslaß- und der Einlaßnockenwellen um dasselbe Ausmaß und in derselben Richtung verstellt werden.

## Revendications

1. Une méthode pour faire fonctionner un moteur à combustion interne alternative à quatre temps, la méthode comprenant les étapes d'aspirer des gaz d'échappement uniquement depuis une ouverture d'échappement de moteur dans le cylindre de moteur pendant au moins la première période de 30° du temps d'admission, aspirer de l'air d'admission depuis une ouverture d'admission de moteur dans le cylindre de moteur pendant le reste de la période du temps d'admission, éjecter une proportion substantielle de l'air admis en retour dans l'ouverture d'admission pendant au moins la première période de 70° du temps de compression et piéger et compresser la charge restant dans le cylindre pendant le reste de la période du temps de compression, et comprenant en outre l'étape de disposer une obstruction d'écoulement bi-directionnelle dans l'ouverture d'admission pour séparer un volume prédéterminé de l'ouverture d'admission du reste du collecteur d'admission, de manière à ce que la pression d'air dans le volume séparé soit substantiellement égale à la pression du gaz dans le cylindre lorsque la soupape d'admission s'ouvre, et de manière à ce que l'air pénètre dans le cylindre préférentiellement par expansion de charge de l'air dans le volume séparé depuis une pression initiale lorsque la soupape d'admission s'ouvre jusqu'à une basse pression à la fin du temps d'admission, pendant le reste du temps d'admission.

2. Un moteur à combustion interne alternative à quatre temps, dans lequel les cadences de la soupape d'échappement et de la soupape d'admission sont déterminées de manière à ce que la soupape d'échappement (20) soit fermée à ou après 30° suite à la position de point mort supérieure, et la soupape d'admission (22) soit ouverte à ou après 30° suite à la position de point mort supérieure et fermée à ou après 70° suite à la position de point mort inférieure, et dans lequel un volet d'accélération à deux positions (26) comprend une plaque perforée déplaçable entre une position fermée dans laquelle elle repose en travers de l'ouverture d'admission et une position ouverte dans laquelle elle repose parallèle à la direction de l'écoulement d'air au travers de l'ouverture d'admission pour séparer un volume d'air prédéterminé dans l'ouverture d'admission (24) immédiatement en amont de la soupape d'admission (22), et dans lequel la plaque perforée présente un rapport de perforation de moins de 5 %.

3. Un moteur selon la revendication 2, dans lequel le volume séparé est inférieur à la moitié de la cylindrée du cylindre de moteur.

4. Un moteur selon l'une quelconque des revendications 2 ou 3, dans lequel un système de distribution à programme variable est fourni pour déterminer les cadences des soupapes telles que souhaitées.

5. Un moteur selon la revendication 4, dans lequel le système de distribution à programme variable est un système de mise en phase variable d'arbre à came pour varier la phase d'un arbre à cames unique faisant fonctionner à la fois les soupapes d'échappement et d'admission.

6. Un moteur selon la revendication 4, dans lequel le système de distribution à programme variable est un système de mise en phase variable d'arbre à came pour varier séparément les phases d'arbre à cames distincts faisant séparément fonctionner les soupapes d'échappement et d'admission respectivement.

7. Un moteur selon la revendication 4, dans lequel le système de distribution à programme variable est un système de mise en phase jumelée dans lequel les phases des arbres à cames d'échappement et d'admission sont variées par le même montant et dans la même direction.
